# EUROPEAN PATENT APPLICATION

(11) **EP 0 871 018 A1**
(43) Date of publication of application: **14.10.1998**
(21) Application number: 98201052.2
(22) Date of filing: 02.04.1998
(51) Int. Cl.: G01F 15/06, G01D 3/08, G08C 23/04

(54) **Electrically isolated interface for fluid meter**

(30) Priority: 10.04.1997 GB 9707301
(71) Applicant: SCHLUMBERGER INDUSTRIES LIMITED, London, WC2B 6XH (GB)
(72) Inventor: Jones, Michael, Felixstowe, Suffolk IP11 8YP (GB); Williams, Gwyn, Sir Ddinbych LL15 2YL (Wales) (GB)
(74) Representative: Dupont, Henri

(57) **Abstract**

Interface circuit (1) adapted to read flow measurements or other data from a fluid meter (2) and which includes a circuit (3) electrically isolated from the rest of the interface circuit, characterised in that the isolated circuit (3) comprises a photovoltaic cell (6), a light emitting element (10) connected to and powered by the photovoltaic cell, and a modulation circuit (CN1, 8, 9) adapted to modulate the output of the light emitting element as a function of the fluid flow or other data received from the fluid meter, and in that the rest of the interface circuit (4) further comprises a light source (11) arranged to energize the photovoltaic cell and a light sensitive sensor (12) receiving the modulated signal sent by the light emitting element.

## Description

The present invention relates to an interface circuit adapted to a read flow measurements or other data from a fluid meter, in particular a gas meter, and which includes a circuit electrically isolated from the rest of the interface circuit.

Remote or automatic reading of consumption meters is a growing trend in the utility business. Consumption data is automatically read from the meter and transmitted by phone or other communication links to a central database. In a domestic environment, where a number of meters (e.g. gas, water and electricity) need to be read, the consumption data from each meter may read by and accumulated in a separate concentrator device located in the household. This concentrator may be connected, for example, to the phone network in order to download data to the central database at the utility headquaters.

Alternatively, in addition to measuring and storing electricity consumption data the electricity meter itself may be adapted to act as the central node for receiving data from the gas and water meters. With the increasing sophistication of solid-state electronic electricity meters, such functionality becomes easier to implement and the reduction in cost provided by the elimination of a separate concentrator unit acts as an incentive in this regard.

In the case of remote reading of fluid meters, specific problems arise relating to the circuitry used to read these meters which are not an issue with electricity meters. In particular, unlike electricity meters, a fluid meter needs to include a separate power supply. Furthermore, the question of safety is also more important due to the proximity of electrical circuitry to a fluid. Although this is an issue even with water or heat meters, particular problems arise in the case of gas meters, since it is obviously imperative to avoid any risk of explosion due to faults, short-circuiting, heating of electrical components etc.

To this end, any circuitry directly associated with the reading of a fluid meter needs to be electrically isolated. This need is particularly strong where the electricity meter is used as the central node for communication, since the meter will be directly connected to the mains supply.

Devices produced to date have typically used a separate battery to provide the power supply for the fluid meter, a solution which enables a reasonable degree of safety, but which is relatively inconvenient in view of the limited lifetime and the expense of a battery. Furthermore, even with the increased safety associated with a battery, the presence of stored charge or active chemicals near, for example, a gas supply can be seen as an extra risk.

The present invention is characterised in that the isolated circuit includes a photovoltaic cell, a light emitting element connected to and powered by the photovoltaic cell, a modulation circuit to modulate the output of the light emitting element as a function of the fluid flow or other data received from the fluid meter, and in that the rest of the interface circuit further comprises a light source arranged to energize the photovoltaic cell and a light sensitive sensor receiving the modulated signal sent by the light emitting element.

In this way, the present invention provides an intrinsically safe interface, electrically isolated from the reset of the metering circuit, which uses relatively inexpensive components and which does not suffer from the drawbacks associated with, for example, a battery powered interface.

Preferably, the isolated circuit further includes an energy storage component, e.g. a capacitor, mounted in parallel with the photovoltaic cell to act as a reserve energy store in the event of a power outage to the light source.

Preferably, the modulation means comprises a connection to a mechanical relay within the fluid meter, the voltage on the photovoltaic cell being switched in response to the operation of the relay, and in which the modulation means further comprises a differentiating circuit receiving as an input the switched voltage signal from the photovoltaic cell and a control switch (e.g. a transistor) adapted to receive the output of the differentiating circuit to activate the light emitting element to emit a pulse of light in response to a change of state of the relay.

In the case of a flow measurement system, the mechanical relay may be connected in the meter to a valve adapted to rotate with the flow of fluid through the meter. Alternatively, the relay may from part of a tilt detect mechanism for detecting fraud.

Advantageously, the light emitting element and light sensitive sensor are adapted to transmit and receive light of a frequency substantially different to that used by the light source and photovoltaic cell. For example, the light emitting element and light sensitive sensor may use infra-red light and the light source and photovoltaic cell, visible light.

This avoids, for example, accidental saturation of the light sensitive sensor by the light source and enables the components of the interface to be grouped together without any problems arising.

Preferably, the light source that powers the photovoltaic cell comprises a plurality of light emitting diodes connected in series. Light emitting diodes are an inexpensive and low-consumption light source, and the connection of a number of such diodes in series allow de-rating and provides a more even lighting along the length of the cell.

The light emitting element in the isolated circuit may comprise one or more infra-red light emitting diodes.

Preferably, either or both of the light source and the light sensitive sensor in the rest of the interface circuit are connected in parallel with one or more reverse biased zener diodes. These serve as protection against current surges and prevent any short circuit between the light source and light sensitive sensor and the neighbouring elements of the isolated circuit.

Preferably, as a further security measure, the power supply to either or both the light source and light sensitive sensor further comprise one or more fuse elements adapted to cut out in the event of a power surge.

In one embodiment, the elements of the isolated circuit may be mounted on a circuit board arranged in proximity, but at a distance from, the elements of the rest of the interface circuit arranged on a second circuit board.

The interface circuit may be embodied in a separate concentrator-type unit arranged to receive consumption data from other meters or may be adapted exclusively for the purposes of reading a single fluid meter. However, the present invention is particularly applicable to an embodiment in which the device is incorporated within an electricity meter. In such a case, the interface circuit may be further electrically isolated from the other circuits within the meter by, for example, one or more opto-isolating circuits either within the interface circuit or within the meter.

There will now be described, by way of example only, a preferred embodiment of the present invention, in which :
Fig. 1 shows the elements of an interface circuit according to this embodiment ;
Fig. 2 shows the relative physical arrangement of the elements of the isolated circuit and the rest of the interface circuit of Fig. 1; and
Fig. 3 shows the connection of the interface circuit of Fig. 1 to a solid state electricity meter.

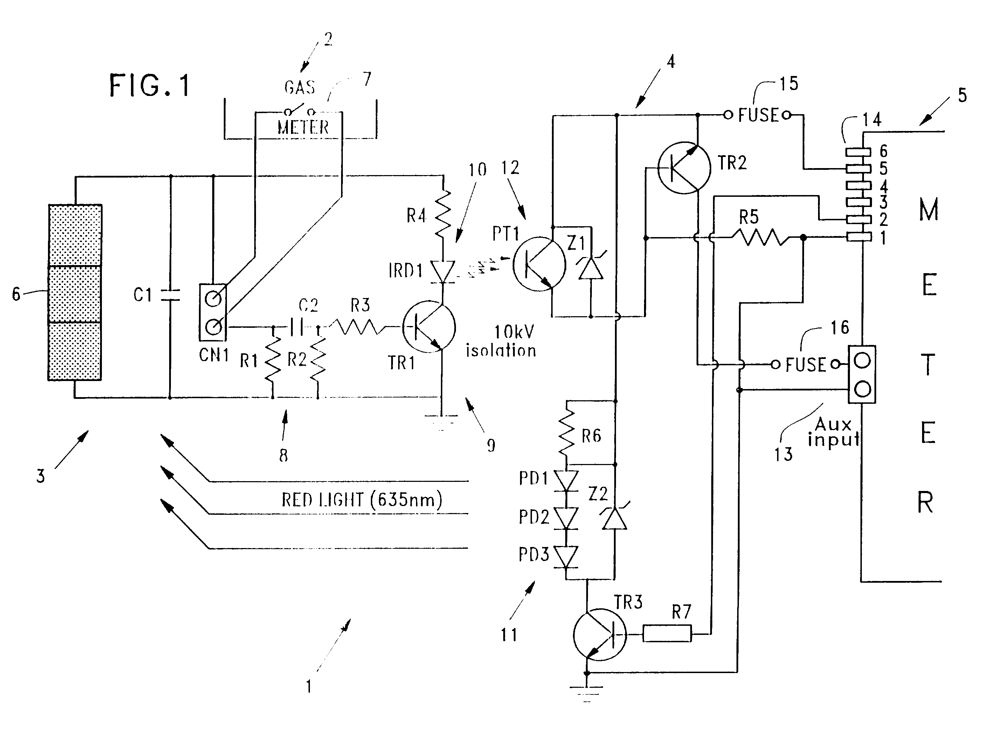

Referring to Figure 1, there is shown an interface circuit 1 connected to read flow data from a gas meter 2. The circuit may equally be used with other fluid meters, such as water or heat meters. The interface circuit 1 is divided between an electrically isolated circuit 3 and the remaining parts 4 of the interface circuit.

The isolated circuit 3 of the interface circuit includes a photovoltaic cell 6 connected to a capacitor C1, used as a buffer energy store in the event of power outage to the directly powered side of the circuit. The output of the photovoltaic cell is further connected via a connection CN1 to a mechanical relay 7 within the gas meter 2, and thereafter to a differentiating circuit 8 comprising a capacitor C2 and resistances R1, R2 and a control switch 9 in the form of a transistor TR1 biased by a resistance R3. The transistor TR1 is in turn connected to a light emitting element 10 in the form of an infra-red light emitting diode IRD1, biased by a resistance R4.

This embodiment is described in relation to a gas meter supplied with a simple mechanical relay. However, in other embodiments, the interface may be used to power up more complex passive or active circuit elements located in the gas meter. Equally, although the aim of the invention is to provide a power supply that avoids the need for any battery in the meter this does not in any way prevent its use, for example, in conjunction with and as a means for recharging a battery powered circuit in the gas meter.

The rest of the interface circuit 4 comprises a light source 11, in the form of three light emitting diodes PD1, PD2, PD3 operating to generate visible red light (circa 635 nm) connected in series and biased by a resistance R6, together with a light sensitive sensor 12 in the form of a photodiode PT1 biased by a resistance R5 and a switching transistor TR2. The output of the photodiode PT1 controls a switching transistor TR2 to input a signal to the electronic meter circuit 5 via the input 13. This side of the interface circuit is powered by a 9V signal present at the modem output 14 of the meter.

In operation, light emitted from the light source 11 is used to energize the photovoltaic cell 6 to provide an output voltage, typically of the order of 2V. This output voltage is switched by the mechanical relay 7 in the gas meter according to the rate of flow within the meter. This relay, which is entirely conventional, is switched in dependance on the turning of a valve in the meter. The square wave switched votage signal is then processed by the differentiating circuit 8 such that the control switch 9 switches the light source 10 on and off with every positive transition in the state of the relay, such that a pulsed infra-red light signal representative of the flow rate is generated.

The pulsed infra-red light signal is received by the sensor 12, which switches the transistor TR2 so as to transmit the received flow data via the input 13 to the metrology circuit of the electricity meter 5, which collects and stores the data in addition to the electricity consumption data that it already holds.

Use of visible light by the light source 11 and cell 6 and infra-red light by the light emitting element 10 and sensor 12 avoids any problems of interference and enables the components to be grouped together on their respective circuit boards.

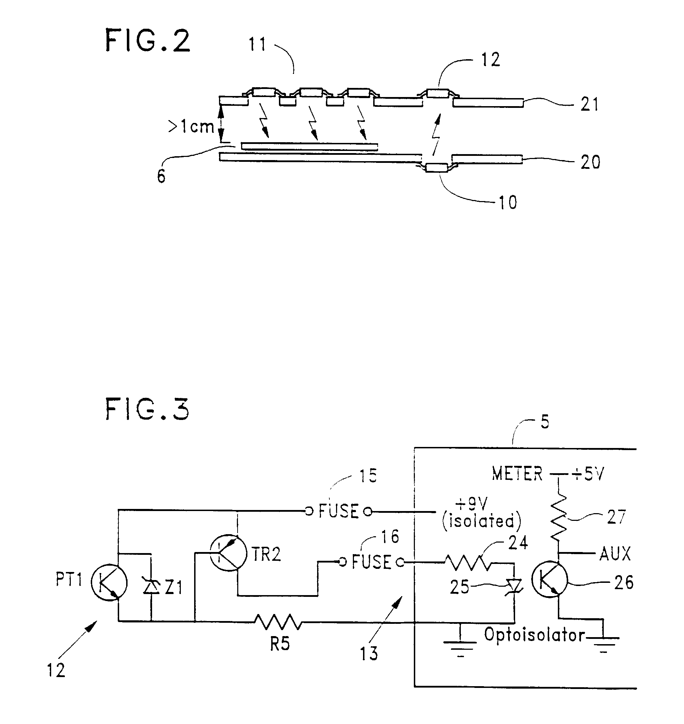

As shown in Fig. 2, the elements of the isolated circuit (in particular, the photovoltaic cell 6 and light emitting element 10) are mounted on a first circuit board 20, whilst the element of the rest of the interface circuit (in particular the light source 11 and light sensitive sensor 12) are mounted on a second circuit board 21. With an isolation gap between the two circuit boards of approximately 1 cm an isolation of up to 10 KV can be achieved.

As a further security measure, and shown in Fig. 1 reverse biased zener diodes Z1 and Z2 are provided in parallel with the light source 11 and light sensor 12, respectively, together with additional fuse elements 15 and 16 placed in the power supply lines to the circuit. In the event of any power surge in this part of the interface circuit, the zener diodes will switch on to conduct the excess current until such time as either or both of the fuses 15 and 16 cut out. The use of the zener diodes Z1 and Z2 to conduct away excess current during this time avoids the possibility of disintegration of the light source 11 or sensor 12 and prevents any risk of compromise of the isolation gap due to sputtering of conductive material from either component into the gap.

As shown in Fig. 1, the operation of the photodiodes PD1, PD2, PD3 may be switched on and off by means of a switching transistor TR3, biased by a resistance R7 and controlled from the modem output of the meter 5. This optional switching circuit enables the photodiodes to be activated or deactivated separately from the other elements of the circuit (e.g. the sensor 12) to avoid unnecessary consumption of power. This may be particularly useful where the gas meter includes more complex circuitry than just a mechanical relay.

Fig. 3 shows a simplified view of part of the circuitry of Fig. 1 associated with the connection of the interface to the meter 5. In this embodiment the input 13 of the interface circuit is further isolated from the rest of the circuitry within the meter by an additional opto-isolating arrangement. In the opto-isolator, a photodiode 25 biased by a resistance 24 is switched on and off by a signal from the switching transistor TR2. The output from the photodiode is received by the phototransistor 26 to provide the input AUX to the metrology elements of the meter.

A similar opto-isolating circuit (not shown) is used to provide an isolated 9V input to power the interface circuit. The use of these further opto-isolating circuits provides another level of security in the system.

In this embodiment, the interface circuit is used in combination with a solid state electricity meter of a known kind, such as the INDIGO+ meter produced by the applicants. In an alternative embodiment, the interface circuit may be used in a separate concentrator unit to receive data from other meters or simply by itself, as discussed in the introduction.

The present embodiment has been described in relation to an interface adapted to read flow measurements represented by the opening and closing of a mechanical relay operated by a valve within the meter. However, the interface circuit may equally be used to read other data from a flow meter, for example, an indication of fraud due to displacement of the meter. In such a case the connection CN1 in Fig.1 may lead to a mechanical relay sensitive to such a displacement. As before, the closing of the relay leads to a positive transition detected by the differentiating circuit and resulting in a single pulsed output. If desired, a pair of such interface circuits may be provided to read both flow rate and fraud data.

## Claims

1. Interface circuit adapted to read flow measurements or other data from a fluid meter and which includes a circuit electrically isolated from the rest of the interface circuit, characterised in that the isolated circuit comprises a photovoltaic cell, a light emitting element connected to and powered by the photovoltaic cell, and a modulation circuit adapted to modulate the output of the light emitting element as a function of the fluid flow or other data received from the fluid meter, and in that the rest of the interface circuit further comprises a light source arranged to energize the photovoltaic cell and a light sensitive sensor receiving the modulated signal sent by the light emitting element.

2. Interface circuit as claimed in claim 1 in which the isolated circuit further includes an energy storage component mounted in parallel with the photovoltaic cell.

3. Interface circuit as claimed in claim 1 or 2 in which the modulation means comprises a connection to a mechanical relay within the fluid meter, the voltage on the photovoltaic cell being switched in response to the operation of the relay, and in which the modulation means further comprises a differentiating circuit receiving as an input the switched voltage signal from the photovoltaic cell and a control switch adapted to receive the output of the differentiating circuit to activate the light emitting element to emit a pulse of light in response to a change of state of the relay.

4. Interface circuit as claimed in any preceding claim in which the light emitting element and light sensitive sensor are adapted to transmit and receive light of a frequency substantially different to that used by the light source and photovoltaic cell.

5. Interface circuit as claimed in any preceding claim in which the light source that powers the photovoltaic cell comprises a plurality of light emitting diodes connected in series.

6. Interface circuit as claimed in any preceding claim in which the light emitting element comprises one or more infra-red light emitting diodes.

7. Interface circuit as claimed in any preceding claim in which either or both of the light source and the light sensitive sensor in the rest of the interface circuit are connected in parallel with one or more reverse biased zener diodes.

8. Interface circuit as claimed in any preceding claim in which the power supply to either or both of the light source and the light sensitive sensor comprises one or more fuse elements adapted to cut out in the event of a power surge.

9. Interface circuit as claimed in any preceding claim in which the elements of the isolated circuit are mounted on a circuit board arranged in proximity, but at a distance from, the elements of the rest of the interface circuit arranged on a second circuit board.

10. Interface circuit as claimed in any preceding claim incorporated within an electricity meter.

11. Interface circuit as claimed in claim 10 in which the interface circuit is further isolated from the other circuits within the electricity meter by one or more opto-isolating circuits.

12. Interface circuit substantially as herinbefore described with reference to the accompanying drawings.
